(19) Europäisches Patentamt / European Patent Office / Office européen des brevets

(11) **EP 2 364 456 B1**

(12) **FASCICULE DE BREVET EUROPEEN**

(45) Date de publication et mention
de la délivrance du brevet:
**26.12.2012 Bulletin 2012/52**

(21) Numéro de dépôt: **09736906.0**

(22) Date de dépôt: **13.10.2009**

(51) Int Cl.:
***G02B 27/02*** *(2006.01)*

(86) Numéro de dépôt international:
**PCT/EP2009/063311**

(87) Numéro de publication internationale:
**WO 2010/043599 (22.04.2010 Gazette 2010/16)**

(54) **DISPOSITIF DE GUIDAGE OPTIQUE D'UN FAISCEAU LUMINEUX**

EINRICHTUNG ZUR OPTISCHEN FÜHRUNG EINES LICHTSTRAHLS

DEVICE FOR THE OPTICAL GUIDING OF A LIGHT BEAM

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **14.10.2008 FR 0856942**

(43) Date de publication de la demande:
**14.09.2011 Bulletin 2011/37**

(73) Titulaire: **Optinvent**
**35700 Rennes (FR)**

(72) Inventeurs:
• **BENOIT, Pascal**
**F-35700 Rennes (FR)**
• **DUBROCA, Guilhem**
**F-35700 Rennes (FR)**
• **SARAYEDDINE, Khaled**
**F-35700 Rennes (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**EP-A- 1 498 765        EP-A- 1 619 536**
**US-A1- 2003 086 135**

**Description**

La présente invention concerne le domaine des guides optiques et plus particulièrement des guides permettant le transport sans déformation d'une image. Ces guides peuvent notamment être utilisés pour la confection de systèmes optiques de vision oculaire plus communément appelés lunettes informatives.

Un guide optique est généralement constitué d'une section d'injection par laquelle l'image est introduite. L'image est constituée d'un faisceau lumineux issu d'une source pouvant être une matrice de pixels LCD (*Liquid cristal display* en anglais) éclairés par une source de lumière. Il peut également s'agir d'une matrice de pixels OLED (*Organic light-emitting diode* en anglais ou diode électroluminescente organique en français). Un système optique permet de projeter cette image à l'infini. On parle de faisceaux collimatés. Ce faisceau collimaté est introduit dans la section d'injection du guide optique. Ce guide peut par exemple être constitué d'un matériau présentant deux faces parallèles. Le faisceau se propage à l'intérieur du guide par réflexion totale interne ou grâce à un traitement spécifique des parois. Le faisceau arrive alors à une section d'extraction permettant sa sortie du guide optique.

La section d'extraction peut être constituée d'un réflecteur terminant le guide par un plan incliné rejoignant les deux faces. Un tel guide est décrit dans le brevet américain publié sous la référence US 2003/0086135. Une problématique constante de ces systèmes est de limiter la complexité et l'encombrement de la section d'injection.

L'invention concerne un dispositif de guidage optique d'un faisceau lumineux transportant une image comportant un matériau formant le guide doté de deux faces parallèles, une face inférieure et une face supérieure ; une section d'injection permettant l'entrée du faisceau lumineux dans le guide, le faisceau se propageant dans le guide par réflexions successives sur les deux faces du guide ; une section d'extraction permettant la sortie du faisceau à base de miroirs d'extraction faisant un angle $\mu$ avec les faces du guide ; les rayons extrêmes définissant la taille angulaire de l'image que l'on veut obtenir en sortie du guide étant issus de rayons formant des angles $\alpha_{min}$ et $\alpha_{max}$ dans le guide et où la section d'injection comporte une face active pouvant être : transmissive dans le cas d'une section d'injection dite transmissive où la face active est la face d'entrée de la lumière ; réflexive dans le cas d'une section d'injection dite réflexive où la face active réfléchit la lumière introduite par une des faces du guide pour l'introduire dans ce guide ; la face active étant telle que le point supérieur de ladite face active est à l'intersection d'une droite passant par l'extrémité de la face supérieure du guide et formant un angle $\alpha_{max}$ avec ladite face supérieure du guide et ladite face active forme un angle égal à $2\mu$ dans le cas transmissif et à $\mu$ dans le cas réflexif avec les faces du guide.

Selon un mode particulier de réalisation de l'invention, la section d'injection étant transmissive, le point inférieur de la face active est situé sur la face inférieure sur une droite passant par l'extrémité de la face supérieure et formant un angle $\alpha_{min}$ avec la face inférieure.

Selon un mode particulier de réalisation de l'invention, la section d'injection étant réflexive, l'angle des miroirs d'extraction étant supérieur ou égal à $(\alpha_{min}+\alpha_{max})/2$, le point inférieur de la face active est situé sur la face inférieure sur une droite passant par l'extrémité de la face supérieure et formant un angle $\alpha_{min}$ avec la face inférieure.

Selon un mode particulier de réalisation de l'invention, la section d'injection étant réflexive, l'angle des miroirs d'extraction étant inférieur à $(\alpha_{min} + \alpha_{max})/2$, le point inférieur de la face active est situé sur une droite présentant un angle $2\mu$ - $\alpha_{max}$ avec les faces parallèles et passant par K et sur le chemin de propagation d'un rayon d'angle $\alpha_{min}$ passant par K après réflexion sur la face inférieure.

Selon un mode particulier de réalisation de l'invention, la section d'injection étant réflexive, l'angle des miroirs d'extraction étant inférieur à $(\alpha_{min}+\alpha_{max})/2$, le point inférieur (J) de la face active est situé sur le chemin de propagation d'un rayon d'angle $\alpha_{min}$ passant par K après réflexion sur la face inférieure, ledit point inférieur (J) de la face active étant à une distance JH de la face inférieure donnée par la formule suivante :

$$JH = e_l \frac{\sin(\alpha_{max} + \alpha_{min} - 2\mu)}{\sin(2\mu + \alpha_{min} - \alpha_{max}) + \sin(\mu + \alpha_{max}) - \sin(\alpha_{max} - \mu)}.$$

Selon un mode particulier de réalisation de l'invention, le raccord (LK) entre le sommet de la face active et la face supérieure du guide est un segment de droite.

Selon un mode particulier de réalisation de l'invention, le raccord (LK) entre le sommet de la face active et la face supérieure du guide est optiquement absorbant. Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 illustre le schéma général d'un guide selon l'invention ;
La Fig. 2 illustre un exemple de réalisation d'un élément de base de la section d'extraction ;
La Fig. 3 illustre la notion de boîte à oeil et la définition des angles $\alpha_{min}$ et $\alpha_{max}$;

La Fig. 4 illustre un premier mode de réalisation de l'invention ;
La Fig. 5 illustre un second mode de réalisation de l'invention ;
La Fig. 6 illustre un troisième mode de réalisation de l'invention ;
La Fig. 7 illustre un quatrième mode de réalisation de l'invention.

La présente invention consiste en un guide optique permettant le transport sans déformation d'une image. L'invention va être décrite en référence à un mode particulier de réalisation destiné à être utilisé dans un système optique de vision oculaire. L'invention peut toutefois être utilisée dans tout autre domaine utilisant des guides optiques tels que des écrans intégrés dans des pare-brises automobiles ou encore dans le cockpit d'un avion.

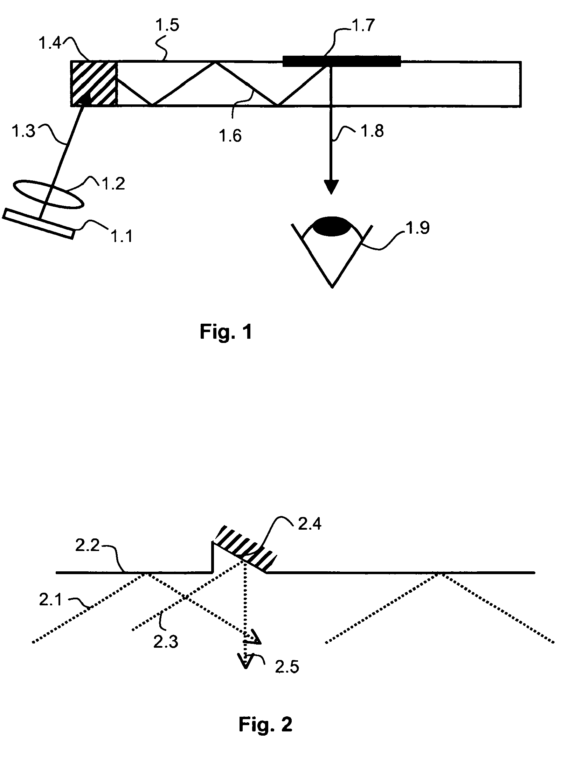

Le schéma général de l'exemple de réalisation est illustré Fig. 1. Une source de lumière 1.1 génère une image lumineuse destinée à transiter par le guide optique. Cette source peut consister en une matrice de pixels LCD disposant d'un éclairage arrière ou encore d'une matrice de pixels OLED. Toute source d'image lumineuse peut être utilisée ici. Cette image est projetée à l'infini, on dira collimatée, par un système optique 1.2. Les différents pixels de l'image sont donc projetés par un faisceau de rayons lumineux parallèles 1.3 en sortie du système optique 1.2. Le champ de vision est défini par la focale de l'objectif et par la demi-diagonale de l'image à projeter. Le faisceau collimaté 1.3 entre dans le guide optique 1.5 par une section d'injection 1.4. Le faisceau est alors transporté dans le guide optique 1.5 sur une longueur arbitraire. Le guide optique 1.5 est constitué d'un matériel transparent à la lumière et présentant deux faces parallèles. Par commodité, on nommera une de ces faces la face inférieure et l'autre la face supérieure par rapport aux dessins. Il est évident que cette distinction est fictive, la section d'extraction pouvant se situer sur l'une ou l'autre de ces faces et l'orientation de la section d'injection pouvant être inversées. Le faisceau lumineux 1.6 est guidé par ces deux faces et se propage par réflexion totale dans le guide. Si l'indice du matériau transparent composant le guide est supérieur à ceux des milieux qui l'entourent, des réflexions internes totales se produisent naturellement dès lors que l'angle d'incidence des rayons du faisceau est suffisamment faible par rapport à la face du guide. Alternativement, si les indices extérieurs sont supérieurs ou égaux, il est possible de disposer d'un dépôt de couches minces de matériau diélectrique pour suppléer dans certaines limites à la condition de réflexion totale interne. Le faisceau arrive alors dans une zone appelée section d'extraction 1.7. Cette zone permet au faisceau de ressortir du guide. Cette zone d'extraction 1.7 est située sur l'une des faces du guide. Elle va permettre de renvoyer les rayons lumineux constituant le faisceau vers l'autre face selon un angle sensiblement perpendiculaire qui va permettre leur sortie du guide. Le faisceau 1.8 sorti du guide peut alors être projeté vers un capteur 1.9 qui peut être l'oeil de l'utilisateur dans le cas d'un système optique de vision oculaire.

La section d'extraction est, par exemple, une section comprenant des microstructures. Ces microstructures sont disposées en surface du guide optique sur l'une des faces de ce guide, les rayons extraits sortant par la face opposée du guide. Elles peuvent être réfractives ou réflexives. La structure peut être unidimensionnelle composée de lignes extractrices ou bidimensionnelle formée d'une mosaïque d'éléments extracteurs. Les éléments extracteurs sont, par exemple, des prismes à face plane dont l'angle actif est constant le long de la structure. La taille et la disposition de ces structures dépendent de l'application utilisant le guide. Dans le cas d'un système optique de vision oculaire, la taille des microstructures sera avantageusement petite par rapport à la taille de la pupille de l'oeil, par exemple de l'ordre de quelques dizaines de $\mu$m. De cette façon, l'image ne varie pas en fonction de la position et des mouvements de l'oeil. Du fait de leur taille et de leur faible distance de l'oeil, ces microstructures sont également invisibles à l'oeil nu. D'autre part, ces microstructures ne couvrant pas intégralement la face du guide, celui-ci reste transparent et permet une vision à travers le guide tout en visualisant l'image issue du guide. Le système permet la vue à travers (*see through* en anglais).

L'exemple de réalisation est basé sur des microstructures réfléchissantes. La structure d'une de ces microstructures est illustrée Fig. 2. La microstructure 2.4 est formée en surface de la face 2.2 du guide. Elle forme un prisme en saillie de cette surface 2.2. Un rayon incident du faisceau lumineux 2.1 qui frappe la surface du guide est totalement réfléchi pour continuer sa course au sein du guide. Au contraire, un rayon incident 2.3 qui frappe la face inclinée de la microstructure 2.4 se voit réfléchi en un rayon 2.5 vers la seconde face du guide selon un angle proche de la normale. De ce fait, le rayon réfléchi 2.5 par la microstructure 2.4 n'est pas réfléchi par la seconde surface et sort du guide. La microstructure est donc formée sur la face opposée à la face de sortie de l'image. Alternativement, les prismes peuvent être formés non pas en saillie, mais par des creux dans la surface sans modifier le fonctionnement des microstructures. Ces microstructures peuvent prendre des formes variées dans la mesure où elles présentent une face réfléchissant les rayons incidents selon un angle proche de la normale à la face de sortie du guide optique.

Dans la suite du document, nous appellerons $\mu$ l'angle que forment les miroirs 2.4 d'extraction avec la face du guide 2.2.

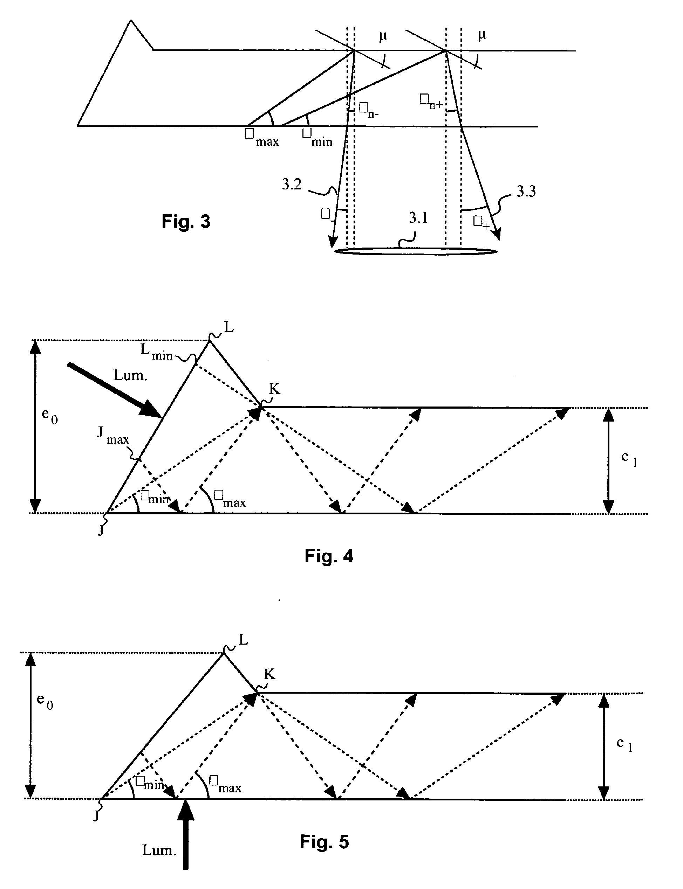

La Fig. 3 illustre la sortie du guide. Pour construire un guide optique tel que celui ici décrit, on commence par déterminer ce que l'on appelle la « boîte à oeil » 3.1, c'est-à-dire la taille angulaire de l'image que l'on veut obtenir et sa direction. On détermine donc la sortie du guide que l'on caractérise par les deux champs ou rayons extrêmes 3.2 et 3.3 formant des angles avec la face du guide notés respectivement $\omega_-$ et $\omega_+$. Il faut noter que, l'image n'étant pas nécessairement centrée sur la normale aux faces parallèles, ces deux nombres ne sont pas nécessairement tels que l'un est l'opposé de l'autre, bien qu'en pratique cela soit souvent le cas.

L'angle $\mu$ des miroirs d'extraction étant choisi, ces angles $\omega_-$ et $\omega_+$ des rayons limites de l'image de sortie définissent les angles $\omega_{n-}$ et $\omega_{n+}$ que font les rayons correspondant dans le guide. A ces rayons dans le guide correspondent des rayons incidents avant la réflexion dans le miroir d'extraction faisant des angles limites respectifs $\alpha_{max}$ et $\alpha_{min}$ vis-à-vis des faces du guide optique.

On va étudier deux familles de modes de réalisation de la section d'injection. Dans tous les cas, la section d'injection est essentiellement constituée d'une face dite active d'où vont provenir les rayons entrant dans le guide. Dans une première famille, la face active est transmissive, elle est alors appelée face d'entrée. Dans ce cas, la lumière pénètre la section d'injection par cette face active. Dans la seconde famille, la lumière pénètre par la face inférieure du guide et vient se réfléchir dans la face active avant de pénétrer le guide optique.

La section d'injection peut être réduite à sa plus simple expression, à savoir par exemple une face présentant un angle $\alpha$ différent de 90° avec les faces parallèles de la lame par laquelle on injecte la lumière ou alors un prisme réfléchissant dans lequel cas on injecte par une des faces de la lame à face parallèle, la face inférieure. Toutefois, si on procède ainsi, il risque d'apparaître des « trous » entre chaque rebond sur une des faces.

En effet, pour un rayon entrant suivant la normale à la face d'entrée, la distance s entre 2 rebonds consécutifs, la face du rebond n'est pas la face de départ, est s = e tan $\alpha$. Le faisceau entrant s'étale sur une distance t = 2e / sin 2$\alpha$. Pour qu'il n'y ait pas de trous, il faut que 2s < t. Or pour $\alpha$ > 45°, on a 2s > t. Pour favoriser les réflexions totales internes, il est souhaitable que cette condition ($\alpha$ > 45°) soit vérifiée.

Pour minimiser ces trous, on peut augmenter la largeur de la face d'entrée.

De façon à assurer l'absence de trous, il faut agrandir la face d'entrée et orienter le raccord d'une certaine façon. On appelle le raccord, la jonction LK qui relie la face d'entrée JL au guide. L étant le sommet de la face active, J son extrémité inférieure et K l'extrémité de la face supérieure du guide. Les champs injectés dans le guide, flèche notée Lum. sur la figure, sont tels que les angles de réflexion sur les faces parallèles dans le guide sont compris entre $\alpha_{min}$ et $\alpha_{max}$ pour les rayons aboutissant dans la boîte à oeil après extraction. Les valeurs de $\alpha_{min}$ et $\alpha_{max}$ sont données par le choix de l'angle $\mu$ des miroirs d'extraction, et des valeurs des champs extrêmes $\omega_+$ et $\omega_-$, comme on l'a vu précédemment sur la Fig. 3.

Selon un mode particulier de réalisation de l'invention, la section d'injection est réalisée telle qu'illustrée par la Fig. 4. Les rayons lumineux sont injectés par une face active servant de face d'entrée JL qui intersecte la face inférieure du guide au point J et formant avec cette face d'entrée un angle aigu. Elle s'étend au-dessus du plan formé par l'autre face du guide qu'elle rejoint par un raccord LK.

L'orientation de la face d'entrée est donnée par la méthode suivante : si on propage à l'envers un rayon qui est extrait normal aux faces parallèles, on remarque que ce rayon forme un certain angle $\alpha_0$ égal à $\pi/2$ - 2$\mu$ avec les faces parallèles du fait de la réflexion sur le miroir d'angle $\mu$. L'angle que la face active forme avec les faces parallèles est alors $\pi/2$-$\alpha_0$ soit 2$\mu$.

Le point d'intersection entre la face active et la face inférieure que l'on appelle J et le point d'intersection entre le raccord et la face supérieure appelé K doivent être tels que le segment JK correspond au trajet d'un rayon extremum d'angle $\alpha_{min}$. On appelle L le sommet de la face d'entrée. Le raccord correspondant au segment KL doit, lui, correspondre au trajet d'un rayon extremum d'angle $\alpha_{max}$, ou tout au moins le point L est situé sur un tel trajet, le raccord pouvant prendre une forme autre qu'un segment de droite. Le triangle JKL est alors déterminé puisqu'on connaît la longueur du segment JK qui est $e_1/\sin(\alpha_{min})$ où $e_1$ est l'épaisseur du guide et deux des angles du triangle. L'angle du sommet J vaut 2$\mu$-$\alpha_{min}$ et l'angle du sommet K vaut $\alpha_{min}$ + $\alpha_{max}$. le troisième angle est alors connu puisque la somme des angles vaut $\pi$. Les longueurs restantes peuvent être déterminées en utilisant, par exemple, la règle des sinus.

Dans la pratique, on peut donc construire la section d'entrée de la manière suivante. Une fois données les faces du guide et choisi l'angle des miroirs d'extraction $\mu$, on choisi le point J. La cible à atteindre choisie, comprise comme la taille angulaire de l'image de sortie que l'on veut obtenir, nous donne les angles $\alpha_{min}$ et $\alpha_{max}$. On projette le point J sur l'autre face du guide pour obtenir K. On trace la face d'entrée d'un angle 2$\mu$ avec la face du guide comprenant J. On projette K selon un angle $\alpha_{max}$ sur cette face d'entrée pour obtenir L.

On appelle $J_{max}$ le point d'intersection entre un rayon d'angle $\alpha_{max}$ venant frapper le point K et la face d'entrée sur la figure. On appelle $L_{min}$ le point d'intersection entre un rayon d'angle $\alpha_{min}$ venant frapper le point K et la face d'entrée. On remarque que les rayons faisant un angle $\alpha_{min}$ avec les faces parallèles entrant entre $L_{min}$ et L sont perdus. Il en est de même pour les rayons faisant un angle $\alpha_{max}$ et entrant entre $J_{max}$ et J. Ces rayons perdus ont donc une intersection avec le raccord LK. Avantageusement, celui-ci doit donc réfléchir aussi peu que possible la lumière pour éviter d'éventuels rayons parasites. Cette construction minimise le volume de la section d'injection, tout en éliminant les trous et en restant dans le cas d'une entrée «directe ». En particulier, elle minimise la hauteur $e_0$ de la section d'injection.

La même démarche visant à concevoir la section d'injection d'encombrement minimal tout en évitant les trous peut être également adoptée pour concevoir une section d'injection où la lumière est injectée via la face avant du guide et injectée par réflexion sur une face réfléchissante.

Le fait de fixer l'angle des miroirs d'extraction $\mu$ entraîne la fixation de l'angle du miroir d'injection dans le cas d'une injection à l'aide d'un miroir. En effet, pour éviter les effets prismatiques qui dégradent l'image, les angles d'injection dans le guide doivent être les angles d'extraction à une symétrie près. Les angles sont en fait opposés du fait des réflexions sur les faces parallèles.

Plusieurs cas sont à différencier.

Tout d'abord si $\mu \geq \alpha_{max}$, on constate qu'aucun rayon ne peut être intercepté deux fois par le miroir. La section d'injection de volume minimal qui ne laisse pas se former des « trous » d'injection dans le guide est celle formée d'un triangle JKL bâti de la même façon que pour le cas transmissif. Le segment JL présente un angle $\mu$ et non plus $2\mu$ par rapport aux faces parallèles, le segment JK $\alpha_{min}$, le segment KL $\alpha_{max}$. Comme on connaît la longueur du segment JK, le triangle est parfaitement défmi. Ce mode de réalisation est illustré par la Fig. 5.

Si $\mu < \alpha_{max}$, alors des rayons peuvent intercepter le miroir deux fois. On risque alors d'injecter des rayons parasites dans le guide.

Un rayon présentant un angle $\alpha > \mu$ avec les faces parallèles sera transformé après réflexion sur le miroir d'injection en un rayon présentant un angle $2\mu - \alpha$, angle inférieur à $\mu$, avec les faces parallèles. Comme ce nouvel angle est inférieur à $\mu$, il ne peut y avoir de nouvelle intersection avec le miroir.

Dans le cas où $\mu \geq (\alpha_{max}+\alpha_{min})/2$, aucun rayon parasite ne peut s'introduire dans le guide. Tous les rayons parasites ont un angle supérieur à $\alpha_{min}$. Si on construit la section d'injection comme dans le cas $\mu \geq \alpha_{max}$, le premier rayon parasite généré l'est au point J. Mais comme l'angle qu'il forme avec la face parallèle est alors supérieur à $\alpha_{min}$, il ne peut entrer dans le guide mais intercepte le segment JL. La configuration envisagée pour le cas usa $\mu \geq \alpha_{max}$ fonctionne donc toujours pour $\mu \geq (\alpha_{max}+\alpha_{min})/2$.

Par le même raisonnement, on s'aperçoit que les brouillages de l'image ne peuvent advenir suite aux doubles réflexions sur le miroir d'injection. De tels rayons aboutissent nécessairement dans le segment JL car ils partent d'un point au-delà de J avec un angle au moins égal à $\alpha_{min}$.

Il se peut toutefois que des angles hors champ puissent s'introduire dans le guide, y être guidés puis extraits. Ces angles sont à éliminer de façon à minimiser autant que possible toute image parasite au voisinage de l'image principale. De tels rayons apparaissent lorsque $\mu < (\alpha_{max}+\alpha_{min})/2$. Ils constituent l'ensemble des rayons parasites lorsque $\mu \leq \alpha_{min}$.

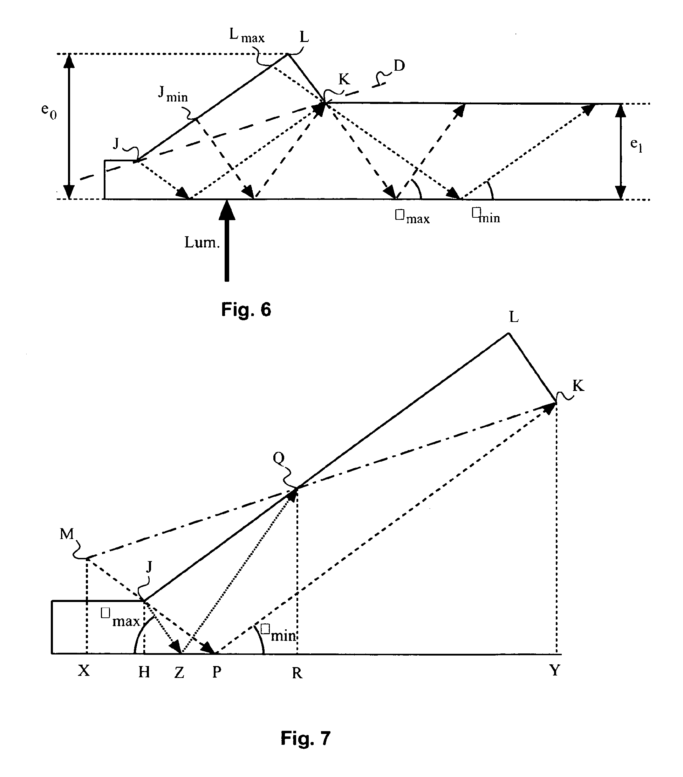

On remarque aussi que les rayons parasites qui seront le plus facilement injectés dans le guide sont ceux qui présentent les angles les plus faibles avec les faces parallèles. Il s'agit donc des rayons parasites qui étaient à l'origine des rayons présentant un angle $\alpha_{max}$ avec les faces parallèles. Le dernier rayon parasite à pouvoir s'injecter dans le guide passe par le point K. Une première façon d'éliminer les rayons parasites est donc de limiter la longueur de la face réfléchissante JL en « remontant » le point J qui n'est plus sur la face du guide servant de face d'entrée. On peut construire la section d'entrée de la façon suivante illustrée par la Fig. 6 :

- tracer la droite D présentant un angle $2\mu - \alpha_{max}$ avec les faces parallèles et passant par K.
- tracer à l'envers du sens de propagation réel le rayon d'angle $\alpha_{min}$ passant par K. Après réflexion sur la face inférieure, il intercepte la droite D en un point J.
- on finit alors la construction de la même façon que pour les autres sections d'injection. Le segment KL présente un angle $\alpha_{max}$ avec les faces parallèles, le miroir commence en J et présente un angle $\mu$ avec les faces parallèles.

Cependant, ce procédé de construction de la section d'injection, bien que résultant en une section d'injection de faible encombrement peut encore être amélioré. En effet, certains rayons d'angle élevé peuvent frapper deux fois le miroir, par exemple un rayon d'angle $\alpha_{max}$ qui passerait par J. On peut donc avantageusement réduire la taille du miroir.

Dans la configuration que nous venons d'exposer, tous les rayons parasites se trouveront au-delà de la droite D, mais il y aura aussi une certaine distance entre le premier rayon parasite et la droite D. Dans une configuration minimisant le volume de la section d'injection, la droite D serait confondue avec un rayon parasite existant réellement, tous les autres se situant au-delà.

La Fig. 7 présente un autre procédé de construction de la section d'injection conduisant à une telle configuration.

Aucun rayon parasite ne doit donc être créé en dessous d'un point Q, intersection du miroir avec le rayon parasite limite. Il s'agit donc de l'intersection de la droite D et du miroir. Cette intersection existe nécessairement, même si nous ne pouvons pas la placer précisément sans autre considération.

D'autre part, le premier rayon utile d'angle $\alpha_{min}$ se réfléchit sur la face d'injection pour la première fois au point P, et rejoint ensuite le point K. Le rayon avant réflexion coupe le rayon parasite limite en M. Le bord J du miroir est situé sur le segment MP car se situer plus bas n'amènerait aucun rayon utile.

En J passe aussi le rayon qui forme un angle $\alpha_{max}$ avec les faces parallèles et qui sera transformé suite à sa deuxième réflexion sur le miroir en le rayon parasite limite. Il intercepte la face parallèle d'injection, ou face inférieure, au point Z.

Sur la Fig. 7, les points X, H, R et Y sont respectivement les projections orthogonales sur la face parallèle d'injection des points M, J, Q et K. La distance KY est connue puisqu'il s'agit de l'épaisseur $e_1$ du guide.

Pour pouvoir construire la section d'injection, il nous faut connaître la distance JH. On pose :

- $k = \alpha_{min} + \alpha_{max} - 2\mu$ ; l'angle au sommet K dans le triangle MPK ;
- $m = 2\mu - \alpha_{max} + \alpha_{min}$; l'angle au sommet M dans les triangles MPK et MJQ;
- $q = \alpha_{max} - \mu$ ; l'angle au sommet Q dans les triangles MJQ et JLQ ;
- $j = \mu + \alpha_{max}$ ; l'angle au sommet J dans le triangle JLQ.

En appliquant la règle des sinus dans le triangle JLQ, on obtient :

JL = QL sin(j)/sin(q) ; et donc :
JH = QR sin(j)/sin(q) ;

La règle des sinus dans MJQ donne :

MX - JH = (QR - JH) sin(q)/sin(m).

Dans MPK :

MX = KY sin(k)/sin(m).

Il vient donc finalement que :

JH = KY sin(k)/(sin(m) + sin(j) - sin(q)) ; soit encore:

$$JH = e_1 \frac{\sin(\alpha_{max} + \alpha_{min} - 2\mu)}{\sin(2\mu + \alpha_{min} - \alpha_{max}) + \sin(\mu + \alpha_{max}) - \sin(\alpha_{max} - \mu)} \;\; ;$$

Les rayons parasites ne posent en fait problème que pour des angles proches de $\alpha_{min}$. En effet, si la différence d'angle devient grande, les rayons parasites ne peuvent rentrer dans la boîte d'oeil. Il est donc possible de refaire les calculs en remplaçant $\alpha_{max}$ par l'angle maximal $\alpha_M$ qui crée un rayon parasite qui rentre dans la boîte d'oeil du système.

Dans ces deux derniers modes de réalisation de l'invention, le point d'extrémité inférieur de la face active J est situé à distance de la face inférieure. Le raccord entre cette face active et la face inférieure peut prendre diverses formes sans influer sur le fonctionnement de l'invention. On peut, par exemple, prolonger la face active par un raccord aligné, mais non réfléchissant. On peut aussi réaliser un décroché comme illustré sur la figure. Il faut éviter que ce raccord puisse générer des rayons parasites qui entreraient dans le guide.

Finalement, il faut noter que les sections d'injection présentées peuvent également varier par la façon de joindre les points L et K, c'est-à-dire de constituer le raccord LK. Les solutions décrites sont les solutions optimales en termes d'encombrement, le raccord LK est une droite, mais cette portion n'ayant pas de fonction purement optique pour l'injection proprement dite, réfractive ou réflective, la courbe LK peut donc s'étendre à l'extérieur de la droite LK sous différentes formes de courbes. On peut citer arc de cercle, triangle rectangle ou autre.

Cette partie peut être optiquement aussi absorbante, mais avantageusement elle ne permet pas aux rayons qui la frappent d'être détournés de façon telle qu'ils pénètrent dans le guide.

## Revendications

**1.** Dispositif de guidage optique d'un faisceau lumineux (1.3) transportant une image comportant :

- un matériau formant le guide (1.5) doté de deux faces parallèles, une face inférieure et une face supérieure ;
- une section d'injection (1.4) permettant l'entrée du faisceau lumineux dans le guide (1.5), le faisceau (1.6) se propageant dans le guide par réflexions successives sur les deux faces du guide ;
- une section d'extraction (1.7) permettant la sortie du faisceau à base de miroirs d'extraction faisant un angle $\mu$ avec les faces du guide ;
- les rayons extrêmes définissant la taille angulaire de l'image que l'on veut obtenir en sortie du guide étant issus de rayons formant des angles $\alpha_{min}$ et $\alpha_{max}$ dans le guide ;

**caractérisé en ce que** la section d'injection :
- comporte une face active (JL) étant :
- transmissive dans le cas d'une section d'injection dite transmissive où la face active est la face d'entrée de la lumière ;
- réflexive dans le cas d'une section d'injection dite réflexive où la face active réfléchit la lumière introduite par une des faces du guide pour l'introduire dans ce guide ;
la face active étant telle que :

- le point supérieur (L) de ladite face active est à l'intersection de ladite face active et d'une droite passant par l'extrémité (K) de la face supérieure du guide et formant un angle $\alpha_{max}$ avec ladite face supérieure du guide ;
- ladite face active forme un angle égal à $2\mu$ dans le cas transmissif et à $\mu$ dans le cas réflexif avec les faces du guide.

2. Dispositif selon la revendication 1, **caractérisé en ce que**, la section d'injection étant transmissive, le point inférieur (J) de la face active est situé sur la face inférieure sur une droite passant par l'extrémité de la face supérieure (K) et formant un angle $\alpha_{min}$ avec la face inférieure.

3. Dispositif selon la revendication 1, **caractérisé en ce que**, la section d'injection étant réflexive, l'angle des miroirs d'extraction étant supérieur ou égal à $(\alpha_{min} + \alpha_{max})/2$, le point inférieur (J) de la face active est situé sur la face inférieure sur une droite passant par l'extrémité de la face supérieure (K) et formant un angle $\alpha_{min}$ avec la face inférieure.

4. Dispositif selon la revendication 1, **caractérisé en ce que**, la section d'injection étant réflexive, l'angle des miroirs d'extraction étant inférieur à $(\alpha_{min} + \alpha_{max})/2$, le point inférieur (J) de la face active est situé sur une droite (D) présentant un angle $2\mu - \alpha_{max}$ avec les faces parallèles et passant par K et sur le chemin de propagation d'un rayon d'angle $\alpha_{min}$ passant par K après réflexion sur la face inférieure.

5. Dispositif selon la revendication 1, **caractérisé en ce que**, la section d'injection étant réflexive, l'angle des miroirs d'extraction étant inférieur à $(\alpha_{min}+\alpha_{max})/2$, le point inférieur (J) de la face active est situé sur le chemin de propagation d'un rayon d'angle $\alpha_{min}$ passant par K après réflexion sur la face inférieure, ledit point inférieur (J) de la face active étant à une distance JH de la face inférieure donnée par la formule suivante :

$$JH = e_1 \frac{\sin(\alpha_{max} + \alpha_{min} - 2\mu)}{\sin(2\mu + \alpha_{min} - \alpha_{max}) + \sin(\mu + \alpha_{max}) - \sin(\alpha_{max} - \mu)} \ .$$

6. Dispositif selon l'une quelconque des revendications précédentes, **caractérisé en ce que** le raccord (LK) entre le sommet de la face active et la face supérieure du guide est un segment de droite.

7. Dispositif selon l'une quelconque des revendications précédentes, **caractérisé en ce que** le raccord (LK) entre le sommet de la face active et la face supérieure du guide est optiquement absorbant.

**Claims**

1. A device for optical guidance of a light beam (1.3) carrying an image, including:

- a material forming the guide (1.5) having two parallel faces, namely a lower face and an upper face;
- an injection section (1.4) allowing the light beam to enter the guide (1.5), the beam (1.6) being propagated in the guide by successive reflections from the two faces of the guide;
- an extraction section (1.7) for the exit of the light beam, based on extraction mirrors forming an angle $\mu$ with the faces of the guide;
- the extreme rays, which delimit the angular dimension of the image to be produced at the exit from the guide, being obtained from rays forming angles $\alpha_{min}$ and $\alpha_{max}$ in the guide;
**characterized in that** the injection section
- includes an active face (JL) which is:

- transmissive in the case of what is known as a transmissive injection section, in which the active face is the light entry face;
- reflective in the case of what is known as a reflective injection section, in which the active face reflects the light introduced through one of the faces of the guide for its introduction into this guide;
the active face being such that:

- the highest point (L) of the active face is at the intersection of the active face and a straight line passing through the end (K) of the upper face of the guide and forming an angle $\alpha_{max}$ with the upper face of the guide;
- the active face forms an angle of $2\mu$, in the transmissive case, and $\mu$, in the reflective case, with the faces of the guide.

2. A device according to Claim 1, **characterized in that**, where the injection section is transmissive, the lowest point (J) of the active face is located on the lower face on a straight line passing through the end of the upper face (K) and forming an angle $\alpha_{min}$ with the lower face.

3. A device according to Claim 1, **characterized in that**, where the injection section is reflective, and the angle of the extraction mirrors is greater than or equal to $(\alpha_{min} + \alpha_{max})/2$, the lowest point (J) of the active face is located on the lower face on a straight line passing through the end of the upper face (K) and forming an angle $\alpha_{min}$ with the lower face.

4. A device according to Claim 1, **characterized in that**, when the injection section is reflective, and the angle of the extraction mirrors is less than $(\alpha_{min} + \alpha_{max})/2$, the lowest point (J) of the active face is located on a straight line (D) forming an angle $2\mu - \alpha_{max}$ with the parallel faces and passing through K, and on the propagation path of a ray at an angle $\alpha_{min}$ passing through K after reflection from the lower face.

5. A device according to Claim 1, **characterized in that**, where the injection section is reflective, and the angle of the extraction mirrors is less than $(\alpha_{min} + \alpha_{max})/2$, the lowest point (J) of the active face is located on the propagation path of a ray at an angle $\alpha_{min}$ passing through K after reflection from the lower face, the lowest point (J) of the active face being at a distance JH from the lower face given by the following formula:

$$JH = e_1 \frac{\sin(\alpha_{max} + \alpha_{min} - 2\mu)}{\sin(2\mu + \alpha_{min} + \alpha_{max}) + \sin(\mu + \alpha_{max}) - \sin(\alpha_{max} - \mu)} .$$

6. A device according to any of the preceding claims, **characterized in that** the link (LK) between the top of the active face and the upper face of the guide is a segment of a straight line.

7. A device according to any of the preceding claims, **characterized in that** the link (LK) between the top of the active face and the upper face of the guide is optically absorptive.

**Patentansprüche**

1. Vorrichtung zum optischen Leiten eines Strahlenbündels (1.3), das ein Bild transportiert, umfassend:

- ein Material, das den Leiter (1.5) bildet, der mit zwei parallelen Seiten, einer unteren Seite und einer oberen Seite, versehen ist;
- einen Einkopplungsabschnitt (1.4), der den Eintritt des Strahlenbündels in den Leiter (1.5) ermöglicht, wobei sich das Strahlenbündel (1.6) in dem Leiter durch aufeinanderfolgende Rückstrahlungen an den beiden Seiten des Leiters ausbreitet;
- einen Extraktionsabschnitt (1.7), der den Austritt des Strahlenbündels anhand von Extraktionsspiegeln ermöglicht, die mit den Seiten des Leiters einen Winkel $\mu$ bilden;
- wobei die Endstrahlen, welche die Winkelgröße des Bildes definieren, das man am Ausgang des Leiters erzielen möchte, aus Strahlen stammen, die im Leiter die Winkel $\alpha_{min}$ und $\alpha_{max}$ bilden;
**dadurch gekennzeichnet, dass** der Einkopplungsabschnitt:
- eine wirksame Seite (JL) umfasst, die:

. im Falle eines so genannten durchlässigen Kopplungsabschnitts, bei dem die wirksame Seite die Eintrittsseite des Lichts ist, durchlässig ist;

. im Falle eines so genannten reflektierenden Kopplungsabschnitts, bei dem die wirksame Seite das Licht reflektiert, das durch eine der Seiten des Leiters eingeführt wird, um es in diesen Leiter einzuführen, reflektierend ist;

wobei die wirksame Seite derart ausgestaltet ist, dass:

- sich der obere Punkt (L) der wirksamen Seite am Schnittpunkt der wirksamen Seite und einer Geraden, die durch das Ende (K) der oberen Seite des Leiters geht und mit der oberen Seite des Leiters einen Winkel $\alpha_{max}$ bildet, befindet;
- die wirksame Seite mit den Seiten des Leiters einen Winkel bildet, der im durchlässigen Fall gleich $2\mu$ und im reflektierenden Fall gleich $\mu$ ist.

2. Vorrichtung nach Anspruch 1, **dadurch gekennzeichnet, dass** sich, wenn der Kopplungsabschnitt durchlässig ist, der untere Punkt (J) der wirksamen Seite auf der unteren Seite auf einer Gerade befindet, die durch das Ende der oberen Seite (K) geht und mit der unteren Seite einen Winkel $\alpha_{min}$ bildet.

3. Vorrichtung nach Anspruch 1, **dadurch gekennzeichnet, dass** sich, wenn der Kopplungsabschnitt reflektierend ist und der Winkel der Extraktionsspiegel größer oder gleich $(\alpha_{min}+\alpha_{max})/2$ ist, der untere Punkt (J) der wirksamen Seite auf der unteren Seite auf einer Geraden befindet, die durch das Ende der oberen Seite (K) geht und mit der unteren Seite einen Winkel $\alpha_{min}$ bildet.

4. Vorrichtung nach Anspruch 1, **dadurch gekennzeichnet, dass** sich, wenn der Kopplungsabschnitt reflektierend ist und der Winkel der Extraktionsspiegel kleiner als $(\alpha_{min}+\alpha_{max})/2$ ist, der untere Punkt (J) der wirksamen Seite auf einer Geraden (D) befindet, die mit den parallelen Seiten einen Winkel $2\mu$ - $\alpha_{max}$ aufweist und durch K geht und auf dem Ausbreitungsweg mit einem Winkelradius $\alpha_{min}$ nach Rückstrahlung auf der unteren Seite durch K geht.

5. Vorrichtung nach Anspruch 1, **dadurch gekennzeichnet, dass** sich, wenn der Kopplungsabschnitt reflektierend ist und der Winkel der Extraktionsspiegel kleiner als $(\alpha_{min}+\alpha_{max})/2$ ist, der untere Punkt (J) der wirksamen Seite auf dem Ausbreitungsweg mit einem Winkelradius $\alpha_{min}$ befindet, der nach Rückstrahlung auf der unteren Seite durch K geht, wobei sich der untere Punkt (J) der wirksamen Seite in einem Abstand JH von der unteren Seite befindet, der durch folgende Formel gegeben ist:

$$ JH = e_1 \frac{\sin(\alpha_{max} + \alpha_{min} - 2\mu)}{\sin(2\mu + \alpha_{min} - \alpha_{max}) + \sin(\mu + \alpha_{max}) - \sin(\alpha_{max} - \mu)} \ . $$

6. Vorrichtung nach einem der vorhergehenden Ansprüche, **dadurch gekennzeichnet, dass** das Verbindungsstück (LK) zwischen der Spitze der wirksamen Seite und der oberen Seite des Leiters eine Strecke ist.

7. Vorrichtung nach einem der vorhergehenden Ansprüche, **dadurch gekennzeichnet, dass** das Verbindungsstück (LK) zwischen der Spitze der wirksamen Seite und der oberen Seite des Leiters optisch absorbierend ist.

1.4    1.5        1.7

1.3

1.2

1.1

1.6     1.8

1.9

**Fig. 1**

2.4

2.2

2.1

2.3

2.5

**Fig. 2**

Fig. 3

Fig. 4

Fig. 5

**Fig. 6**

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030086135 A